# EUROPEAN PATENT SPECIFICATION

(11) **EP 1 240 778 B1**
(45) Date of publication and mention of the grant of the patent: **27.04.2005**
(21) Application number: 00990242.0
(22) Date of filing: 19.12.2000
(51) Int. Cl.: H04N 1/00

(54) **METHOD AND DEVICE FOR GENERATING MULTIPLE LANGUAGE MESSAGES FOR DISTRIBUTION TO SET-TOP TERMINALS IN A BROADCAST TELEVISION SYSTEM**
SYSTEM UND GERÄT ZUR ERZEUGUNG VON NACHRICHTEN IN MEHREREN SPRACHEN FÜR DIE VERTEILUNG AN SET-TOP-ENDGERÄTE IN EINEM RUNDFUNKFERNSEHSYSTEM
PROCEDE ET DISPOSITIF SERVANT A GENERER DES MESSAGES DE LANGAGE MULTIPLES AFIN DE LES DISTRIBUER A DES TERMINAUX DE SYSTEME DE TELEDIFFUSION

(30) Priority: 22.12.1999 US 470083
(43) Date of publication of application: 18.09.2002
(73) Proprietor: General Instrument Corporation, Horsham, Pennsylvania 19044 (US)
(72) Inventor: LEARY, Patrick, J., Horsham, PA 19044 (US); BLUM, William, Harleysville, PA 19438 (US); REICHGOTT, Samuel, Coopersburg, PA 18036 (US); COHEN, Howard, Maple Glen, PA 19002 (US)
(74) Representative: HOEGER, STELLRECHT & PARTNER Patentanwälte
(86) International application number: PCT/US2000/034464
(87) International publication number: WO 2001/047286

(56) References cited:
- WO-A-98/27759
- WO-A-99/57927
- US-A- 5 497 186

## Description

### BACKGROUND OF THE INVENTION

The present invention relates to a method and apparatus for providing multiple language messages for display via set-top terminals in a broadcast television network, such as a cable of satellite television network. In particular, the invention allows different terminals in a common network to display a message in a corresponding assigned language. Furthermore, the messages can be targeted from a network headend to specific terminals.

US-A-5,497,186 discloses a CATV system comprising a centre facility for transmitting, together with a television signal carrying a broadcast program, a message directed to a particular terminal apparatus, address data of the particular terminal apparatus, and quantity data indicating a quantity of the message. A plurality of terminal apparatuses is provided, wherein each of the terminal apparatuses is operable to receive the address data. The address data enables the particular terminal apparatus to display the entire message on an associated TV receiver based on the quantity data and to finish the display of the message when receiving an instruction from a user indicating reception of the entire message.

WO-A-98/27759 discloses a method of forwarding voice messages to a subscriber in a mobile telephone system; the system comprises a subscriber register arranged in connection with a mobile services switching centre for maintaining subscriber-specific information. A subscriber-specific language code is stored indicating the language in which the subscriber wants to hear the messages addressed to him in the subscriber register arranged in connection with a mobile services switching centre. Voice messages are forwarded to the subscriber in the language indicated by the language code stored in the subscriber register.

The operators of broadcast networks, such as broadband communication networks, often have a need to communicate with the terminal users in the network. For example, there may be a need to inform the users of their account status, such as an overdue bill, or provide emergency messages, e.g., to report weather or other emergencies.

Systems have been proposed to send messages to specific groups of subscribers via a network, such as described in commonly-assigned U.S. Patent 5,260,778 to Kauffman et at., entitled "Apparatus For Selective Distribution Of Messages Over A Communications Network", incorporated herein by reference. With this system, messages comprising alphanumeric characters are targeted to specific subscriber terminals based on tag data.

However, there is a need for a system to send multi-lingual messages to terminal in a common network so that the messages can be displayed in a desired language that has been assigned to the terminal. For example, a common network may cover a number of multi-lingual regions, such as in Europe or Asia. It is inefficient to provide customized terminals for each region. Moreover, even within a small geographic region, the language preferences of different subscribers can vary.

Accordingly, it would be desirable to provide a system that addresses the above issues. The system should allow a terminal to have a multi-lingual capability.

Moreover, the system should be implementable with a relatively low cost and degree of complication.

The system should allow a network operator to set the language preferences of the terminals in a network.

The system should enable a network operator to broadcast messages that are, or are not, related to other programming, such as television programs.

The system should allow messages to be broadcast either in-band and/or out-of-band with programming service signals.

The system should provide identifying information for the different languages in which a message is provided without requiring analysis of the message itself at the terminals to identify the language.

The system should be suited for use with virtually any desired language and corresponding character set, including those specified in the Unicode standard.

Furthermore, the system should be suitable for use in an analog or digital video environment.

Additionally, the system should be suitable for use with virtually any type of broadcast or interactive network, including a satellite network and a cable television network.

The present invention provides a system having the above and other advantages.

### SUMMARY OF THE INVENTION

The present invention relates to a system for providing multiple language messages for display via set-top terminals in a broadcast television network.

The invention provides the capability to generate individual component messages, each in a different language, and to combine them into a compound message. Each component message within the compound message is given a designator that identifies the language in which the component message is provided. The compound message is then broadcast to all terminals in the system. Addressing techniques may be used to address the messages for recovery only by specific terminals.

Preferably, an operating system is used that can be adapted to support all character sets for all languages of the world.

An operator runs a message editor, e.g., at a headend, to compose a component text message. Before composing the message, a language is selected which causes the message editor to make available the appropriate character set for the language. Once the component message is created, it is saved and a language identifier which is unique for that language is attached to the message. Additional component messages typically related to the same topic are composed using alternate language selections. When the component messages for all the desired languages are created, the operator combines them into a compound message. This compound message is ready for broadcast to the terminals in the television network.

Advantageously, the compound message is handled in the system as a single message. For example, it can be scheduled, given a destination, and added and deleted from the controller's database as a single unit.

The controller can manage the broadcast of messages to the terminals in the system on a dedicated control channel (e.g., out-of-band). The controller optionally transmits the compound message to a data insertion/scrambling device which transmits the message in-band, e.g., in the vertical blanking interval (VBI) of an analog television signal, or interleaved with video packets of a digital television multiplex.

Regardless of how it is transmitted, when the compound message reaches a terminal, the language identifier in each component message is checked to see if it matches the terminal's assigned language preference. If there is a matching language identifier, then the corresponding message is acquired and displayed. All other component messages are discarded.

Optionally, the component messages comprise bit-map data for the alphanumeric (text) component messages that can be rendered directly on screen, without the need for converting codewords for text characters to bit-map data.

A particular method for providing multi-lingual messages to a subscriber terminal population in a television network in accordance with the invention includes the step of providing the terminals in the terminal population with language preference data identifying a language preference thereof. A plurality of component messages are formed at a distribution point of the network, such as a headend. Each component message is provided in a different language. A language identifier is provided for each of the component messages to identify the language thereof, and the component messages are assembled to form a compound message. Finally, the compound message is broadcast to the terminal population. The terminals are adapted to retrieve the component message of the compound message whose language identifier corresponds to the terminal's language preference data.

A corresponding decoding method, and encoding and decoding apparatuses are also presented.

### BRIEF DESCRIPTION OF THE DRAWINGS

FIG. 1 illustrates a headend and a representative terminal in a broadcast network in accordance with the present invention.
FIG. 2 illustrates the formation of a compound message with different component messages in accordance with the present invention.
FIG. 3 illustrates a terminal in accordance with the present invention.

### DETAILED DESCRIPTION OF THE INVENTION

The present invention relates to a system for providing multiple language messages for display via set-top terminals in a broadcast television network.

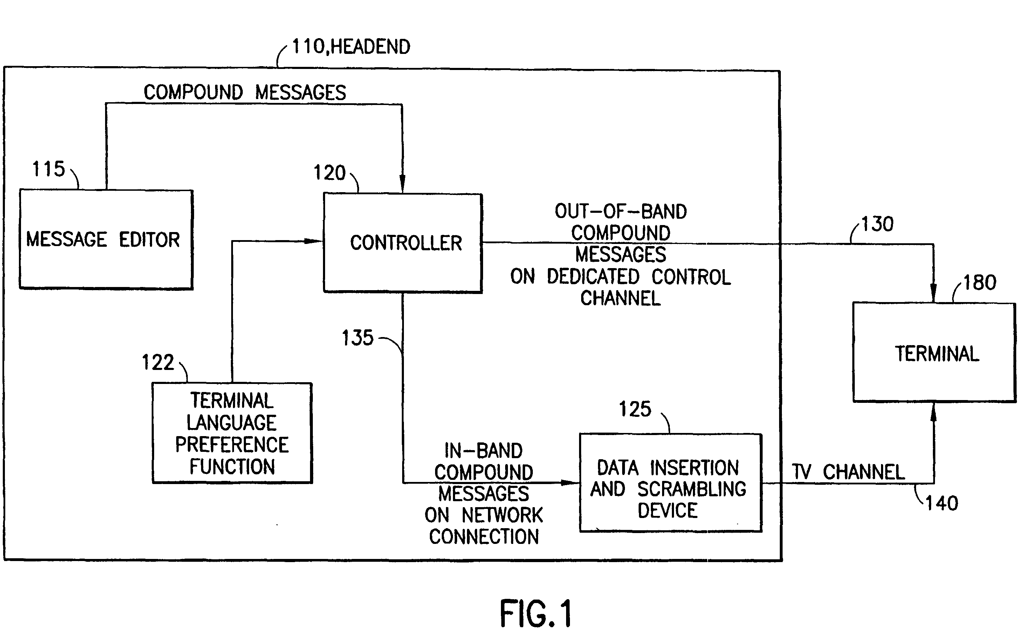

FIG. 1 illustrates a headend and a representative terminal in a broadcast network in accordance with the present invention. The terminal is also known in the art a decoder, a set-top box, an integrated receiver-decoder (IRD) or the like. Note that a "set-top" terminal for a television need not be located on top of the television but can be located nearby or otherwise have its functions incorporated into the television.

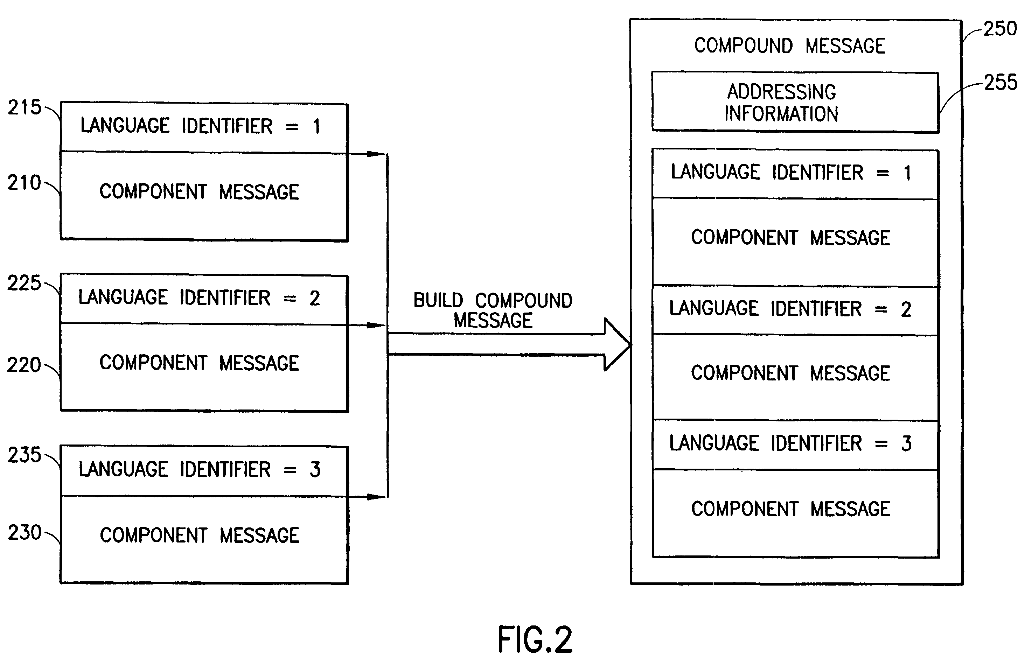

The headend 110 may be, e.g., the headend of a cable television network, or an intermediate redistribution point in a network. The headend 110 is a distribution or broadcast point of the network, and includes a message editor 115 which provides compound messages to a controller 120. The compound messages are discussed further in connection with FIG. 2. The messaging editor 115 offers the network operator the ability to compose text messages and send them to the terminals in the system. The controller 120 can provide the compound messages to the terminal 180 either via an out-of-band dedicated control channel 130, and/or via an in-band network connection 135 and an in-band television channel 140. A data insertion device 125 with an optional scrambling capability for the television programs is used to insert the compound messages into the TV channel 140, such as in the VBI.

A terminal language preference function 122 controls the assignment of a language preference for specific terminals. Preferably, the headend 110 transmits initialization data to each terminal using addressing techniques to set the preference of each terminal at the time the terminal is placed into service for a household, or at other times as appropriate, e.g., upon request by the household.

The representative terminal 180 receives the compound messages via either or both of the channels 130 and 140. The other terminals in the network similarly receive the compound messages.

The terminal 180 processes the compound message according to its assigned language preference to provide an alphanumeric message comprising text and/or numbers to an output display device, such as a television or other video monitor.

When the set-top terminal is in a television network that has a mixed language population, the text used by the set-top terminal in communicating with the viewer is selected based on the preferences of the household. In accordance with the invention, a single terminal model can be set to one of several languages. Moreover, the language setting can vary from terminal to terminal within the system. Furthermore, the language preference of the same terminal can be changed over time according to the needs of the household using it. The household may communicate with the network operator to request a re-assignment of the language preference, or change the preference locally.

The message editor 115 can compose several types of messages, including general purpose e-mail type messages, referred to as stored messages since they can be stored at a terminal, system error messages, referred to as barker messages (e.g., "you are out of credit", "not authorized to view this channel", "this channel parentally controlled"), and channel identifier maps, which comprise lists of short strings that augment the channel number and typically hold the call sign of the channel, e.g., "ABC".

Furthermore, the messages can be broadcast to all terminals, or can be addressed to individual or groups of terminals using known addressing techniques. For example, a message regarding the overdue status of an account can be addressed only to those affected viewers, while an emergency message regarding a snow storm can be broadcast to all viewers.

Moreover, the component messages can comprise codewords for text (e.g., characters, such as those comprising letters and/or numbers), or optionally, codewords for bit-map data of the characters that are to be rendered on-screen. Advantageously, the bit-map data can be rendered directly at a terminal, whereas the text must be converted to a bit-map data at the terminal prior to rendering.

Additionally, a capability for encrypting the messages may be provided at the headend 110, if desired.

FIG. 2 illustrates the formation of a compound message with different component messages in accordance with the present invention.

The message editor 115 provides component messages in a number of different languages. Three different languages are assumed in the present example although essentially any number can be used depending on the needs of the network. The messages may be generated locally by an operator or by some automated means, such as a computer, or received via a remote link, such as a news service link.

A first component message 210, e.g., in English, has an associated language identifier 215, while a second component message 220, e.g., in Spanish, has an associated language identifier 225, and a third component message 230, e.g., in French, has an associated language identifier 235. The component message may include other information regarding the characters in the message, such as display color, location on screen, size, style, scroll speed, special effects such as flashing, and so forth

As an example, the first component message 210 may comprise the text "weather alert - tornado warning in effect." Corresponding text is provided in the designated languages for the second 220 and third component messages 230. The component messages may comprise codewords from the Unicode character set, for example.

Optionally, the component messages include codewords for bit-map data of the characters that are to be rendered.

A compound message 250 is then formed that comprises each of the component messages and their respective identifiers for transmission to the terminals. The compound message 250 optionally includes addressing information 255 for addressing the compound message as a single entity to one or more terminals in the network. Any known addressing technique can be used. For user- or group-specific messages, the compound message is addressed only to those affected users or groups, while for general interest messages, the compound message is addressed to all terminals. The compound message is essentially broadcast to all users, but is only retrieved by the users designated by the addressing information.

A "wild card", or "all terminals" data field may be used to indicate that all terminals in the population are to retrieve the compound message.

Moreover, the entire message or only a portion can be sent in a component message. Preferably, each component message is sent in its entirety as a block. The entire message is then scheduled for transmission on the data channel. When it is time to send the message, all of the bytes of the component message are sent back to back until the entire component message has been transmitted. Next, the bytes of the following component message are transmitted, and so forth.

If the component messages are broken into portions, e.g., due to bandwidth limitations of the channel, the bytes in a first portion of the first component message are sent, then the bytes in a first portion of the second component message are sent, and so forth in a time-multiplexed manner. Subsequently, the bytes in a second portion of the first component message are sent, the bytes in a second portion of the second component message are sent, and so forth.

The component message and compound message may be provided using any known messaging technique and syntax.

There are a number of advantages in having a single compound message that includes the different component messages. Specifically, the compound message is handled in the system as a single message. It can be scheduled, given a destination, and added and deleted from the controller's database as a single unit. Also, there is less overhead data (e.g., error correcting data and the like) with the compound message so less bandwidth is consumed. Moreover, the tasks of setup, preparation and management are reduced for the network operator. The network operator only has to transfer, schedule, and maintain one message for each message subject. This helps to keep the controller's database organized.

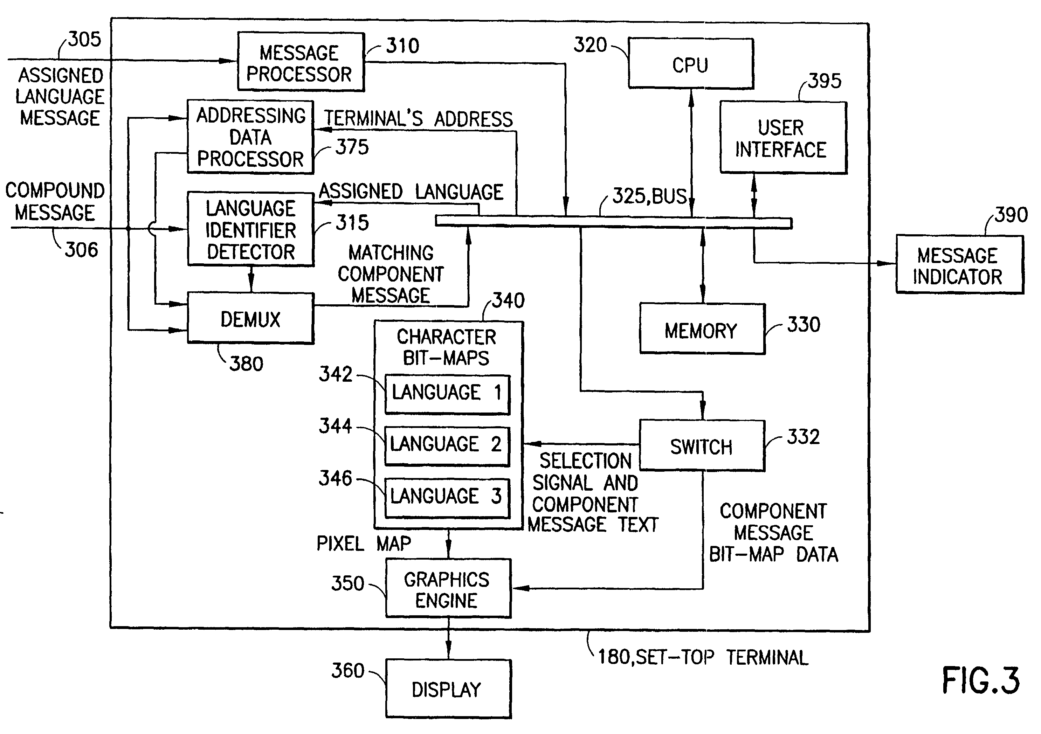

FIG. 3 illustrates a terminal in accordance with the present invention.

The terminal 180 receives an assigned language message via a path 305 from the headend to set the language preference of the terminal. The message can be stored in a non-volatile memory, such as the memory 330, after processing at a message processor 310 and, e.g., transport on a bus 325. It is also possible to have the language preference set locally, via a user input to an optional user interface 395. Other initialization data can also be provided via the path 305.

The terminal receives the compound message via path 306, which can be in-band with programming services, or out-of-band. The compound message includes the component messages in the different languages, their associated language identifiers and, optionally, addressing information for addressing the compound message to one or more specific terminals.

Note that the paths 305 and 306 can be the same but are shown separately only for clarity.

The addressing data, if present, is processed at an addressing data processor 375 to determine if the compound message is intended for the terminal 180. If it is not addressed to the terminal 180, the compound message is discarded. If the compound message is addressed to the terminal 180, the addressing data processor 375 sends a signal to the demultiplexer (demux) 380 to indicate that one of the component message is to be retrieved.

A language identifier detector 315 compares the assigned language of the terminal 180 to the respective language identifiers of the component messages to determine a matching component message. The matching component message is recovered at the demux 380 and provided to a switch 332 via the bus 325.

Note that the message may be immediately processed for display, or stored, e.g., in the memory 330, and processed for display at a later time.

The switch 332, under the control of a CPU 320, sends the component message to a character bit-map function 340 if the message comprises text, or to the graphics engine 350 directly if the message comprises bit-map data.

The character bit-map function 340 may include bit map data for different languages, e.g., language 1 (342), language 2 (344), and language 3 (346). Optionally, when the different languages have overlapping characters in their character sets, bit map data for the common characters can be provided. The common characters and language-specific characters then form the total character set.

Optionally, it is possible to provide each terminal with a bit-map only for the character set for the corresponding assigned language. This can be achieved by providing the appropriate data at the time the terminal is manufactured or installed in the user's home, or by downloading the necessary information to the terminal from a headend in an initialization procedure.

During terminal initialization, the headend sets the language preference of the terminals, and provides a variety of other operating parameters, such as channel maps, frequency maps, services to descramble and other information. Some parameters that are specific to the geographic location of the terminal, such as monetary format, can be specified explicitly, while other parameters are implied through the terminal's language preference. These implied parameters may include, for example, date or time format, or language of an on-screen menu system.

In practice, a single font set can be stored in memory, and tables that map character codes to character bit map can be provided for each language. The language assignment determines which table is actively used.

The bit map function 340 receives character code words from the matching component message, such as two-byte unicode codewords, and outputs a corresponding pixel map. The terminal 180 may be designed to handle different types of languages, such as those that use single-byte character sets (e.g., ASCII) and those that require two bytes (e.g., Unicode). The language assignment determines which type of character set is used.

Pixel map data corresponding to the matching component message is output from the bit map function 340 to a graphics engine 350 to render the message on a display 360, such as a television screen. The component message data can include information regarding the color, location, size, and other details for the display of the message, or these details can be implemented according to default data stored locally at the terminal 180.

Other information may designate how the message is displayed, e.g., on a separate channel, on the currently-viewed channel, overlaid with other programming or by itself, in a split-screen format, as a moving banner, and so forth.

Generally, when a message arrives at the terminal 180, a message indicator 390, such as a light-emitting diode (LED) 390, may be activated to notify the user that a message came in. Some other type of notification, such as a beeper, can also be provided. The user can then view the message by navigating the menu system using keys on a hand-held remote control, for example. The terminal can be tuned to any channel when the message is being viewed.

Generally, when a message is displayed, the currently-viewed program from the tuner is de-selected and replaced with a raster generated by hardware in the terminal. The message is written to an area of memory, such as random access memory (RAM), that is used by the hardware to generate the image containing the message. The message may be overlaid on the video where live video can be seen around the edge of the message or completely override the video, where the message is placed on a black background and no video is seen. When the viewer presses a button on the remote control to select the message, it stays on the screen until the viewer exits the screen. The message can be multiple pages and the viewer may have to page down a few times to read it all.

A central processing unit (CPU) 320 may provide overall control of the functions of the terminal 180.

Note that the various functions of the terminal 180 (as well as of the headend 110 of FIG. 1) can be implemented using shared circuitry and any known hardware, firmware and/or software techniques. The depiction of a block for performing a specific function does not imply that the function is implemented independently of the other functions using separate circuitry.

Moreover, not all functions of the terminal are shown. For example, depending on the broadcast scheme, the terminals may employ demodulators, equalizers, error-correcting circuits, deinterleavers, decompression circuitry, descrambling circuitry, look-up tables, and so forth. Additionally, circuitry for processing the audio and video data of the programming services is not shown.

Additionally, note that initialization data can be stored in the non-volatile memory 330 at terminal 180.

Furthermore, control data can be set, e.g., by the person who composes the message at the headend, to allow the viewer to discard the message after it has been read, or to not permit viewer deletion. A command from the controller 120 at the headend 110 (FIG. 1) can indicate whether viewer deletion is permitted, or designate a schedule for deleting the message, e.g., delete the message seven days after transmission. The non-volatile memory 330 is used so that the message can be recalled whenever the viewer wants to read it again, assuming it has not been deleted. Non-volatile memory is also useful to save a message that has been received, where the terminal subsequently loses power before the viewer has a chance to view the message.

A capability for decrypting the retrieved component message is optionally provided at the terminal 180, if required.

Additionally, an instant-on option may be provided that causes the message to be displayed even when the terminal is not turned on when the message is received.

Accordingly, it can be seen that the present invention provides a multiple-language messaging capability for terminals in a television network. The invention allows a common terminal to be deployed in any location. A language preference of the terminal is set individually, preferably by the headend of the network. Thus, terminals in the same geographic location can be set to have a different language preference depending the needs of the household. Corresponding initialization data is sent to each terminal to enable it to receive messages.

At the headend, component messages are composed in a number of different languages, and language identifiers are associated with each component message. The component messages are combined into a single compound message that can be conveniently stored, scheduled, addressed and otherwise handled as a single entity. The compound message is broadcast to the terminals in a network so that one of the component messages can be recovered according to the language preference of the terminal. Bit-map data is then selected to render the message in a pixel map for display on a television. The compound message can be addressed to specific terminals or to all terminals in the network depending on the message content.

In an optional embodiment, the component messages comprise bit-map data for the text message that can be rendered directly on screen, without requiring converting codewords for the text characters to bit-map data.

Although the invention has been described in connection with various specific embodiments, those skilled in the art will appreciate that numerous adaptations and modifications may be made thereto without departing from the spirit and scope of the invention as set forth in the claims.

For example, while the invention was discussed in connection with a cable or satellite television broadband communication networks, it will be appreciated that other networks such as local area networks (LANs), metropolitan area networks (MANs), wide area networks (WANs), internets, intranets, and the Internet, or combinations thereof, may be used.

## Claims

1. A method for providing multi-lingual text messages to a subscriber terminal population in a television network, comprising the steps of:
providing the terminals in the terminal population with language preference data identifying a language preference thereof;
forming a plurality of component messages at a distribution point of the network, each component message being provided in a different language;
providing language identifier data for each of the component messages to identify the language thereof;
assembling the component messages to form a compound message; and
broadcasting the compound message to the terminal population;
wherein the terminals are adapted to recover the component message of the compound message whose language identifier data corresponds to the terminal's language preference data.

2. The method of claim 1, comprising the further step of:
providing addressing information for the compound message to address the compound message to at least one of the terminals;
wherein only the terminals specified by the addressing information are adapted to recover the corresponding component messages.

3. The method of claim 1 or 2, wherein:
a headend of the network transmits the language preference data to at least one of the terminals in an initialization step.

4. The method of claim 3, wherein:
the language preference data is provided at the terminals in accordance with a user input thereat.

5. The method of one of claims 1 to 4, wherein the component messages comprise text, comprising the further step of:
selecting character bit-map data at the terminals in accordance with the language preference data thereof for forming a display message from the text of the corresponding recovered component message.

6. The method of claim 5, wherein:
at least a portion of the character bit-map data is transmitted from a headend of the network to the terminals for storage thereat.

7. The method of one of claims 1 to 6, comprising the further step of:
storing the compound message and scheduling it for subsequent broadcasting to the terminal population.

8. The method of one of claims 1 to 7, wherein:
the terminals are adapted to discard the component messages of the compound message whose language identifier data does not correspond to the terminal's language preference data.

9. The method of one of claims 1 to 8, wherein the component messages comprise bit-map data, comprising the further step of:
forming a display message from the bit-map data of the corresponding recovered component message.

10. An apparatus for providing multi-lingual text messages to a subscriber terminal population in a television network, comprising:
means (122) for providing the terminals (180) in the terminal population with language preference data identifying a language preference thereof;
means (115) for forming a plurality of component messages (210, 220, 230) at a distribution point of the network, each component message being provided in a different language;
means (115) for providing language identifier data (215, 225, 235) for each of the component messages(210, 220, 230) to identify the language thereof;
means (115) for assembling the component messages (210, 220, 230) to form a compound message (250); and
means (120, 130; 120, 135, 140) for broadcasting the compound message (250) to the terminal population;
wherein the terminals (180) are adapted to recover the component message of the compound message whose language identifier data corresponds to the terminal's language preference data.

11. A decoding method for use by a subscriber terminal population in a television network that provides multi-lingual text messages, comprising the steps of:
storing language preference data identifying a language preference at the terminals in the terminal population;
receiving a compound message that is broadcast from a distribution point of the network;
wherein the compound message is formed by assembling a plurality of component messages at the distribution point of the network, each component message is provided in a different language, and language identifier data is provided for each of the component messages to identify the language thereof; and
recovering the component message of the compound message whose language identifier data corresponds to the respective terminal's language preference data.

12. The method of claim 11, wherein:
addressing information for the compound message is provided to address the compound message to at least one of the terminals; and
only the terminals specified by the addressing information are adapted to recover the corresponding component messages.

13. The method of claim 11 or 12, comprising the further step of:
receiving the language preference from a headend of the network.

14. The method of one of claims 11 to 13, comprising the further step of:
receiving a user input at the terminals that designates the respective language preference data.

15. The method of one of claims 11 to 14, wherein the component messages comprise text, comprising the further step of:
selecting character bit-map data at the terminals in accordance with the language preference data thereof for forming a display message from the text of the corresponding recovered component message.

16. The method of claim 15, wherein:
at least a portion of the character bit-map data is transmitted from a headend of the network to the terminals for storage thereat.

17. The method of one of claims 11 to 16, wherein:
the terminals are adapted to discard the component messages of the compound message whose language identifier data does not correspond to the terminal's language preference data.

18. The method of one of claims 11 to 17, wherein the component messages comprise bit-map data, comprising the further step of:
forming a display message from the bit-map data of the corresponding recovered component message.

19. A subscriber terminal in a terminal population in a television network that provides multi-lingual text messages, comprising:
means (330) for storing language preference data identifying a language preference of the terminal (180);
means (306, 375) for receiving a compound message that is broadcast from a distribution point of the network;
wherein the compound message is formed by assembling a plurality of component messages at the distribution point of the network, each component message is provided in a different language, and language identifier data is provided for each of the component messages to identify the language thereof; and
means (315, 380) for recovering the component message of the compound message whose language identifier data corresponds to the terminal's language preference data.

20. The terminal of claim 19, wherein addressing information for the compound message is provided to address the compound message to the terminal, further comprising:
means (315, 380) for recovering the corresponding component messages only when specified by the addressing information.

21. The terminal of claim 19 or 20, further comprising:
means (305, 310) for receiving the language preference data from a headend of the network.

22. The terminal of one of claims 19 to 21, further comprising:
means (395) for receiving a user input that designates the respective language preference data.

23. The terminal of one of claims 19 to 22, wherein the component messages comprise text, further comprising:
means (320, 332, 340) for selecting character bit-map data at the terminals in accordance with the language preference data thereof for forming a display message from the text of the corresponding recovered component message

24. The terminal of claim 23, wherein:
at least a portion of the character bit-map data is transmitted from a headend of the network to the terminals for storage thereat.

25. The terminal of one of claims 19 to 24, further comprising:
means (375) for discarding the component messages of the compound message whose language identifier data does not correspond to the terminal's language preference data.

26. The terminal of one of claims 19 to 25, wherein the component messages comprise bit-map data, further comprising:
means (350) for forming a display message from the bit-map data of the corresponding recovered component message.

27. A broadcast signal for providing multi-lingual text messages to a subscriber terminal population in a television network, comprising:
a compound message comprising a plurality of component messages that are provided in corresponding different languages, and corresponding language identifier data for identifying each of the different languages;
wherein:
the compound message is formed by providing the plurality of component messages at a distribution point of the network, providing the corresponding language identifier data for each of the component messages, and assembling the component messages to form the compound message.

## Patentansprüche

1. Ein Verfahren zum Bereitstellen von mehrsprachigen Textnachrichten für eine Teilnehmerendgerätgesamtheit in einem Fernsehnetz, das die folgenden Schritte beinhaltet:
Versorgen der Endgeräte in der Endgerätgesamtheit mit Sprachbevorzugungsdaten, die deren Sprachbevorzugung kennzeichnen;
Bilden einer Vielzahl von Komponentennachrichten an einem Endverzweiger des Netzwerkes, wobei jede Komponentennachricht in einer anderen Sprache bereitgestellt wird;
Bereitstellen von Sprachkennzeichnerdaten für jede der Komponentennachrichten zur jeweiligen Kennzeichnung ihrer Sprache;
Zusammensetzen der Komponentennachrichten, um eine Verbundnachricht zu bilden; und
Aussenden der Verbundnachricht an die Endgerätgesamtheit;
wobei die Endgeräte so angepasst sind, dass sie die Komponentennachricht der Verbundnachricht abfangen, deren Sprachkennzeichnerdaten den Sprachbevorzugungsdaten des Endgerätes entsprechen.

2. Verfahren gemäß Anspruch 1, das den folgenden weiteren Schritt beinhaltet:
Bereitstellen von Adressierinformationen für die Verbundnachricht, so dass die Verbundnachricht an mindestens ein Endgerät adressiert wird;
wobei nur die von den Adressierinformationen festgelegten Endgeräte angepasst sind, die entsprechenden Kompenentennachrichten abzufangen.

3. Verfahren gemäß Anspruch 1 oder 2, wobei:
eine Kopfstelle des Netzwerkes die Sprachbevorzugungsdaten in einem Initialisierungsschritt an mindestens eins der Endgeräte überträgt.

4. Verfahren gemäß Anspruch 3, wobei:
die Sprachbevorzugungsdaten an den Endgeräten in Übereinstimmung mit einer dortigen Benutzereingabe bereitgestellt werden.

5. Verfahren gemäß einem der Ansprüche 1 bis 4, wobei die Komponentennachrichten Text beinhalten, das den folgenden weiteren Schritt beinhaltet:
Auswählen von Zeichen-Bitmap-Daten an den Endgeräten in Übereinstimmung mit deren jeweiligen Sprachbevorzugungsdaten zum Bilden einer Bildschirmmitteilung mit dem Text der entsprechenden abgefangenen Komponentennachricht.

6. Verfahren gemäß Anspruch 5, wobei:
zumindest ein Teil der Zeichen-Bitmap-Daten von einer Kopfstelle des Netzwerkes an die Endgeräte übertragen wird, um dort gespeichert zu werden.

7. Verfahren gemäß einem der Ansprüche 1 bis 6, das den folgenden weiteren Schritt beinhaltet:
Speichern der Verbundnachricht und ihr Terminieren zur darauf folgenden Aussendung an die Endgerätgesamtheit.

8. Verfahren gemäß einem der Ansprüche 1 bis 7, wobei:
die Endgeräte so angepasst sind, dass sie die Komponentennachrichten der Verbundnachricht, deren Sprachkennzeichnerdaten nicht den Sprachbevorzugungsdaten des Endgerätes entsprechen, aussondern.

9. Verfahren gemäß einem der Ansprüche 1 bis 8, wobei die Komponentennachrichten Bitmap-Daten beinhalten, das den folgenden weiteren Schritt beinhaltet:
Bilden einer Bildschirmmitteilung mit den Bitmap-Daten der entsprechenden abgefangenen Komponentennachricht.

10. Eine Vorrichtung zum Bereitstellen von mehrsprachigen Textnachrichten für eine Teilnehmerendgerätgesamtheit in einem Fernsehnetz, die Folgendes beinhaltet:
Mittel (122) zum Versorgen der Endgeräte (180) der Endgerätgesamtheit mit Sprachbevorzugungsdaten, die deren Sprachbevorzugung kennzeichnen;
Mittel (115) zum Bilden einer Vielzahl von Komponentennachrichten (210, 220, 230) an einem Endverzweiger des Netzwerkes, wobei jede Komponentennachricht in einer anderen Sprache bereitgestellt wird;
Mittel (115) zum Bereitstellen von Sprachkennzeichnerdaten (215, 225, 235) für jede der Komponentennachrichten (210, 220, 230) zur Kennzeichnung ihrer Sprache;
Mittel (115) für das Zusammensetzen der Komponentennachrichten (210, 220, 230), um eine Verbundnachricht (250) zu bilden; und
Mittel (120, 130; 120, 135, 140) zur Aussendung der Verbundnachricht (250) an die Endgerätgesamtheit;
wobei die Endgeräte (180) so angepasst sind, dass sie die Komponentennachricht der Verbundnachricht, deren Sprachkennzeichnerdaten den Sprachbevorzugungsdaten des Endgerätes entsprechen, abfangen.

11. Ein Decodierverfahren zur Verwendung durch eine Teilnehmerendgerätgesamtheit eines Fernsehnetzes, welches mehrsprachige Textnachrichten bereitstellt, wobei das Verfahren die folgenden Schritte beinhaltet:
Speichern von Sprachbevorzugungsdaten, die eine Sprachbevorzugung in den Endgeräten der Endgerätgesamtheit kennzeichnen;
Empfangen einer Verbundnachricht, die von einem Endverzweiger des Netzwerkes ausgesendet wurde;
wobei die Verbundnachricht durch das Zusammensetzen einer Vielzahl von Komponentennachrichten an dem Endverzweiger des Netzwerkes gebildet wird, wobei jede Komponentennachricht in einer anderen Sprache bereitgestellt wird und für jede Komponentennachricht Sprachkennzeichnerdaten zur Kennzeichnung ihrer Sprache bereitgestellt werden; und
Abfangen der Komponentennachricht der Verbundnachricht, deren Sprachkennzeichnerdaten den Sprachbevorzugungsdaten des jeweiligen Endgerätes entsprechen.

12. Verfahren gemäß Anspruch 11, wobei:
Adressierinformationen für die Verbundnachricht bereitgestellt werden, so dass die Verbundnachricht an mindestens ein Endgerät adressiert wird; und
nur die von den Adressierinformationen festgelegten Endgeräte angepasst sind, die entsprechenden Kompenentennachrichten abzufangen.

13. Verfahren gemäß Anspruch 11 oder 12, das den folgenden weiteren Schritt beinhaltet:
Empfangen der Sprachbevorzugung von einer Kopfstelle des Netzwerkes.

14. Verfahren gemäß einem der Ansprüche 11 bis 13, das den folgenden weiteren Schritt beinhaltet:
Empfangen einer Benutzereingabe an den Endgeräten, durch die die jeweiligen Sprachbevorzugungsdaten bestimmt werden.

15. Verfahren gemäß einem der Ansprüche 11 bis 14, wobei die Komponentennachrichten Text beinhalten, das den folgenden weiteren Schritt beinhaltet:
Auswählen von Zeichen-Bitmap-Daten an den Endgeräten in Übereinstimmung mit deren Sprachbevorzugungsdaten zum Bilden einer Bildschirmmitteilung mit dem Text der entsprechenden abgefangenen Komponentennachricht.

16. Verfahren gemäß Anspruch 15, wobei:
zumindest ein Teil der Zeichen-Bitmap-Daten von einer Kopfstelle des Netzwerkes an die Endgeräte übertragen wird, um dort gespeichert zu werden.

17. Verfahren gemäß einem der Ansprüche 11 bis 16, wobei:
die Endgeräte so angepasst sind, dass sie die Komponentennachrichten der Verbundnachricht, deren Sprachkennzeichnerdaten nicht den Sprachbevorzugungsdaten des Endgerätes entsprechen, aussondern.

18. Verfahren gemäß einem der Ansprüche 11 bis 17, wobei die Komponentennachrichten Bitmap-Daten beinhalten, das den folgenden weiteren Schritt beinhaltet:
Bilden einer Bildschirmmitteilung mit Bitmap-Daten der entsprechenden abgefangenen Komponentennachricht.

19. Ein Teilnehmerendgerät in einer Endgerätgesamtheit eines Fernsehnetzes, das mehrsprachige Textnachrichten bereitstellt, wobei das Teilnehmerendgerät Folgendes beinhaltet:
Mittel (330) zum Speichern von Sprachbevorzugungsdaten, die eine Sprachbevorzugung des Endgerätes (180) kennzeichnen;
Mittel (306, 375) zum Empfangen einer Verbundnachricht, die von einem Endverzweiger des Netzwerkes ausgesendet wird;
wobei die Verbundnachricht durch das Zusammensetzen einer Vielzahl von Komponentennachrichten an dem Endverzweiger des Netzwerkes gebildet wird, wobei jede Komponentennachricht in einer anderen Sprache bereitgestellt wird und für jede Komponentennachricht Sprachkennzeichnerdaten zu ihrer Sprachkennzeichnung bereitgestellt werden; und
Mittel (315, 380) zum Abfangen der Komponentennachricht der Verbundnachricht, deren Sprachkennzeichnerdaten den Sprachbevorzugungsdaten des Endgerätes entsprechen.

20. Endgerät gemäß Anspruch 19, wobei Adressierinformationen für die Verbundnachricht bereitgestellt werden, so dass die Verbundnachricht an ein Endgerät adressiert wird, das ferner Folgendes beinhaltet:
Mittel (315, 380), die dazu dienen, dass die entsprechenden Komponentennachrichten nur dann abgefangen werden, wenn sie von den Adressierinformationen festgelegt worden sind.

21. Endgerät gemäß Anspruch 19 oder 20, das ferner Folgendes beinhaltet:
Mittel (305, 310) zum Empfangen der Sprachbevorzugungsdaten von einer Kopfstelle des Netzwerkes.

22. Endgerät gemäß einem der Ansprüche 19 bis 21, das ferner Folgendes beinhaltet:
Mittel (395) zum Empfangen einer Benutzereingabe, die die jeweiligen Sprachbevorzugungsdaten bestimmt.

23. Endgerät gemäß einem der Ansprüche 19 bis 22, wobei die Komponentennachrichten Text beinhalten, das ferner Folgendes beinhaltet:
Mittel (320, 332, 340) zum Auswählen von Zeichen-Bitmap-Daten an den Endgeräten in Übereinstimmung mit deren Sprachbevorzugungsdaten zum Bilden einer Bildschirmmitteilung mit dem Text der entsprechenden abgefangenen Komponentennachricht.

24. Endgerät gemäß Anspruch 23, wobei:
zumindest ein Teil der Zeichen-Bitmap-Daten von einer Kopfstelle des Netzwerkes an die Endgeräte übertragen wird, um dort gespeichert zu werden.

25. Endgerät gemäß einem der Ansprüche 19 bis 24, das ferner Folgendes beinhaltet:
Mittel (375) zum Aussondern der Komponentennachrichten der Verbundnachricht, deren Sprachkennzeichnerdaten nicht den Sprachbevorzugungsdaten des Endgerätes entsprechen.

26. Endgerät gemäß einem der Ansprüche 19 bis 25, wobei die Komponentennachrichten Bitmap-Daten beinhalten, das ferner Folgendes beinhaltet:
Mittel (350) zum Bilden einer Bildschirmmitteilung mit den Bitmap-Daten der entsprechenden abgefangenen Komponentennachricht.

27. Ein Rundfunksignal zum Bereitstellen von mehrsprachigen Textnachrichten für eine Teilnehmerendgerätgesamtheit in einem Fernsehnetz, das Folgendes beinhaltet:
eine Verbundnachricht, die eine Vielzahl von Komponentennachrichten, die in entsprechenden unterschiedlichen Sprachen bereitgestellt sind, und entsprechenden Sprachkennzeichnerdaten zum Kennzeichnen jeder der unterschiedlichen Sprachen beinhaltet; wobei:
die Verbundnachricht durch das Bereitstellen der Vielzahl von Komponentennachrichten an einem Endverzweiger des Netzwerkes, das Bereitstellen der entsprechenden Sprachkennzeichnerdaten für jede Komponentennachricht und das Zusammensetzen der Komponentennachrichten zum Bilden der Verbundnachricht gebildet wird.

## Revendications

1. Une méthode destinée à fournir des messages textuels multilingues à une population de terminaux d'abonnés dans un réseau de télévision, comportant les étapes de :
munir les terminaux dans la population de terminaux de données de préférence de langue identifiant une préférence de langue de ceux-ci ;
former une pluralité de messages à composants à un point de distribution du réseau, chaque message à composants étant fourni dans une langue différente ;
fournir des données identificatrices de langue pour chacun des messages à composants pour identifier la langue de celui-ci ;
assembler les messages à composants pour former un message composé ; et
diffuser le message composé à la population de terminaux ;
dans laquelle les terminaux sont adaptés pour récupérer le message à composants du message composé dont les données identificatrices de langue correspondent aux données de préférence de langue du terminal.

2. La méthode de la revendication 1, comportant l'étape supplémentaire de :
fournir des informations d'adressage pour le message composé pour adresser le message composé à au moins l'un des terminaux ;
dans laquelle seuls les terminaux spécifiés par les informations d'adressage sont adaptés pour récupérer les messages à composants correspondants.

3. La méthode de la revendication 1 ou la revendication 2, dans laquelle :
une tête de réseau du réseau transmet les données de préférence de langue à au moins l'un des terminaux dans une étape d'initialisation.

4. La méthode de la revendication 3, dans laquelle :
les données de préférence de langue sont fournies aux terminaux conformément à une entrée utilisateur au niveau de ceux-ci.

5. La méthode de l'une des revendications 1 à 4, dans laquelle les messages à composants comportent du texte, comportant l'étape supplémentaire de :
sélectionner des données de topogramme binaire de caractères aux terminaux conformément aux données de préférence de langue de ceux-ci pour former un message d'affichage à partir du texte du message à composants récupéré correspondant.

6. La méthode de la revendication 5, dans laquelle :
au moins une portion des données de topogramme binaire de caractères est transmise d'une tête de réseau du réseau aux
terminaux pour être stockées au niveau de ceux-ci.

7. La méthode de l'une des revendications 1 à 6, comportant l'étape supplémentaire de :
stocker le message composé et planifier sa diffusion ultérieure à la population de terminaux.

8. La méthode de l'une des revendications 1 à 7, dans laquelle :
les terminaux sont adaptés pour rejeter les messages à composants du message composé dont les données identificatrices de langue ne correspondent pas aux données de préférence de langue du terminal.

9. La méthode de l'une des revendications 1 à 8, dans laquelle les messages à composants comportent des données de topogramme binaire, comportant l'étape supplémentaire de :
former un message d'affichage à partir des données de topogramme binaire du message à composants récupéré correspondant.

10. Un appareil destiné à fournir des messages textuels multilingues à une population de terminaux d'abonnés dans un réseau de télévision, comportant :
un moyen (122) destiné à munir les terminaux (180) dans la population de terminaux de données de préférence de langue identifiant une préférence de langue de ceux-ci ;
un moyen (115) destiné à former une pluralité de messages à composants (210, 220, 230) à un point de distribution du réseau, chaque message à composants étant fourni dans une langue différente ;
un moyen (115) destiné à fournir des données identificatrices de langue (215, 225, 235) pour chacun des messages à composants (210, 220, 230) pour identifier la langue de ceux-ci ;
un moyen (115) destiné à assembler les messages à composants (210, 220, 230) pour former un message composé (250) ; et
des moyens (120, 130 ; 120, 135, 140) destinés à diffuser le message composé (250) à la population de terminaux ;
dans laquelle les terminaux (180) sont adaptés pour récupérer le message à composants du message composé dont les données identificatrices de langue correspondent aux données de préférence de langue du terminal.

11. Une méthode de décodage destinée à être utilisée par une population de terminaux d'abonnés dans un réseau de télévision qui fournit des messages textuels multilingues, comportant les étapes de :
stocker les données de préférence de langue identifiant une préférence de langue au niveau des terminaux dans la population de terminaux ;
recevoir un message composé qui est diffusé à partir d'un point de distribution du réseau ;
dans laquelle le message composé est formé en assemblant une pluralité de messages à composants au point de distribution du réseau, chaque message à composants est fourni dans une langue différente, et des données identificatrices de langue sont fournies pour chacun des messages à composants pour identifier la langue de ceux-ci ; et
récupérer le message à composants du message composé dont les données identificatrices de langue correspondent aux données de préférence de langue du terminai respectif.

12. La méthode de la revendication 11, dans laquelle :
des informations d'adressage pour le message composé sont fournies pour adresser le message composé à au moins l'un des terminaux ; et
seuls les terminaux spécifiés par les informations d'adressage sont adaptés pour récupérer les messages à composants correspondants.

13. La méthode de la revendication 11 ou la revendication 12, comportant l'étape supplémentaire de :
recevoir la préférence de langue d'une tête de réseau du réseau.

14. La méthode de l'une des revendications 11 à 13, comportant l'étape supplémentaire de :
recevoir une entrée utilisateur au niveau des terminaux qui désigne les données de préférence de langue respectives.

15. La méthode de l'une des revendications 11 à 14, dans laquelle les messages à composants comportent du texte, comportant l'étape supplémentaire de :
sélectionner des données de topogramme binaire de caractères aux terminaux conformément aux données de préférence de langue de ceux-ci pour former un message d'affichage à partir du texte du message à composants récupéré correspondant.

16. La méthode de la revendication 15, dans laquelle :
au moins une portion des données de topogramme binaire de caractères est transmise d'une tête de réseau du réseau aux terminaux pour être stockée au niveau de ceux-ci.

17. La méthode de l'une des revendications 11 à 16, dans laquelle :
les terminaux sont adaptés pour rejeter les messages à composants du message composé dont les données identificatrices de langue ne correspondent pas aux données de préférence de langue du terminal.

18. La méthode de l'une des revendications 11 à 17, dans laquelle les messages à composants comportent des données de topogramme binaire, comportant l'étape supplémentaire de :
former un message d'affichage à partir des données de topogramme binaire du message à composants récupéré correspondant.

19. Un terminal d'abonné dans une population de terminaux dans un réseau de télévision qui fournit des messages textuels multilingues, comportant :
un moyen (330) destiné à stocker des données de préférence de langue identifiant une préférence de langue du terminal (180) ;
des moyens (306, 375) destinés à recevoir un message composé qui est diffusé à partir d'un point de distribution du réseau ;
dans lequel le message composé est formé en assemblant une pluralité de messages à composants au point de distribution du réseau, chaque message à composants est fourni dans une langue différente, et des données identificatrices de langue sont fournies pour chacun des messages à composants pour identifier la langue de ceux-ci ; et
des moyens (315, 380) destinés à récupérer le message à composants du message composé dont les données identificatrices de langue correspondent aux données de préférence de langue du terminal.

20. Le terminal de la revendication 19, dans lequel des informations d'adressage pour le message composé sont fournies pour adresser le message composé au terminal, comportant de plus :
des moyens (315, 380) destinés à récupérer les messages à composants correspondants seulement lorsque spécifié par les informations d'adressage.

21. Le terminal de la revendication 19 ou la revendication 20, comportant de plus :
des moyens (305, 310) destinés à recevoir les données de préférence de langue d'une tête de réseau du réseau.

22. Le terminal de l'une des revendications 19 à 21, comportant de plus:
un moyen (395) destiné à recevoir une entrée utilisateur qui désigne les données de préférence de langue respectives.

23. Le terminal de l'une des revendications 19 à 22, dans lequel les messages à composants comportent du texte, comportant de plus :
des moyens (320, 332, 340) destinés à sélectionner des données de topogramme binaire de caractères au niveau des terminaux conformément aux données de préférence de langue de ceux-ci pour former un message d'affichage à partir du texte du message à composants récupéré correspondant.

24. Le terminal de la revendication 23, dans lequel :
au moins une portion des données de topogramme binaire de caractères est transmise d'une tête de réseau du réseau aux terminaux pour être stockées au niveau de ceux-ci.

25. Le terminal de l'une des revendications 19 à 24, comportant de plus :
un moyen (375) destiné à rejeter les messages à composants du message composé dont les données identificatrices de langue ne correspondent pas aux données de préférence de langue du terminal.

26. Le terminal de l'une des revendications 19 à 25, dans lequel les messages à composants comportent des données de topogramme binaire, comportant de plus :
un moyen (350) destiné à former un message d'affichage à partir des données de topogramme binaire du message à composants récupéré correspondant.

27. Un signal de diffusion destiné à fournir des messages textuels multilingues à une population de terminaux d'abonnés dans un réseau de télévision, comportant :
un message composé comportant une pluralité de messages à composants qui sont fournis dans des langues différentes correspondantes, et des données identificatrices de langue correspondantes destinées à identifier chacune des langues différentes ; dans lequel :
le message composé est formé en fournissant la pluralité de messages à composants au niveau d'un point de distribution du réseau, en fournissant les données identificatrices de langue correspondantes pour chacun des messages à composants, et en assemblant les messages à composants pour former le message composé.
